# FASCICULE DE BREVET EUROPEEN

(11) **EP 2 655 163 B1**
(45) Date de publication et mention de la délivrance du brevet: **25.02.2015**
(21) Numéro de dépôt: 11811100.4
(22) Date de dépôt: 13.12.2011
(51) Int. Cl.: B62D 5/065, B62D 5/06

(54) **PROCEDE DE CONTROLE D'UN DISPOSITIF DE DIRECTION ASSISTEE POUR VEHICULE AUTOMOBILE EQUIPE D'UN SYSTEME STOP&START**
VERFAHREN ZUR STEUERUNG EINER SERVOLENKVORRICHTUNG FÜR EIN KRAFTFAHRZEUG MIT EINEM STOPP/STARTSYSTEM
METHOD FOR CONTROLLING A POWER STEERING DEVICE FOR A MOTOR VEHICLE EQUIPPED WITH A STOP&START SYSTEM

(30) Priorité: 21.12.2010 FR 1060972
(43) Date de publication de la demande: 30.10.2013
(73) Titulaire: Renault S.A.S., 92100 Boulogne-Billancourt (FR)
(72) Inventeur: CHAUVELIER, Eric, F-78320 Le Mesnil Saint Denis (FR)
(86) Numéro de dépôt international: PCT/FR2011/052962
(87) Numéro de publication internationale: WO 2012/085392

(56) Documents cités:
- EP-A2- 1 375 301
- DE-A1- 10 050 377
- US-A1- 2009 313 987

## Description

L'invention concerne le domaine des dispositifs de direction assistée.

L'invention concerne plus particulièrement un procédé de contrôle d'un dispositif de direction assistée pour véhicule automobile équipé d'un système Stop & Start, le dispositif de direction assistée comprenant un groupe électropompe comprenant au moins un moteur électrique et un calculateur.

Il est connu de la demande de brevet publiée sous le numéro FR 2 864 000 un dispositif de direction assistée électro-hydraulique pour véhicule automobile. Ce dispositif comprend un groupe électropompe ou GEP dont les quatre composants sont assemblés entre eux de sorte que la pompe est entraînée en rotation par le moteur électrique sous la commande du calculateur en fonction d'un signal représentatif de la vitesse du véhicule et d'un signal représentatif de la vitesse de variation de l'angle du volant de direction. Plus particulièrement, lors d'un actionnement du volant, la charge du moteur électrique augmente et, en fonction de cette augmentation de la charge, la consommation du courant augmente également. Précisons que, tant que le conducteur du véhicule n'actionne pas le volant, le moteur électrique tourne sans charge à une vitesse de ralenti, qui varie en fonction de la vitesse du véhicule. Suite à un actionnement du volant et donc à une demande d'assistance, le moteur électrique tourne à une vitesse d'assistance appropriée qui varie en fonction de la vitesse du véhicule et de la vitesse de la variation du courant du moteur. Lorsque le système constate qu'il n'y a plus de demande d'assistance, le moteur revient à sa vitesse de ralenti initiale. Dans ce dispositif, le signal représentatif de la vitesse de variation de l'angle du volant de direction est généré par le calculateur en fonction du courant consommé par le moteur électrique. Ceci permet de détecter une demande d'assistance sans qu'il soit nécessaire de disposer d'un capteur d'angle du volant.

Il est également connu de la demande de brevet publiée sous le numéro FR 2 907 411 un procédé pour piloter un groupe électropompe d'un dispositif de direction assistée électro-hydraulique pour véhicule automobile. Le calculateur est alimenté par un connecteur de puissance électrique d'alimentation et par un connecteur de signal qui transmet les signaux électriques permettant de connaître l'état du véhicule. Ce dernier est plus particulièrement défini par les paramètres suivants : la vitesse du véhicule, la vitesse de rotation du volant, l'angle du volant, un contrôle automatique de performance et l'état du moteur thermique du véhicule. Le procédé consiste à commander le moteur électrique pendant une ou plusieurs périodes successives non seulement en fonction de valeurs prédéterminées respectives pour les paramètres susmentionnés, mais aussi en fonction d'une valeur prédéterminée du courant consommé par le moteur électrique du dispositif de direction assistée, ce courant étant mesuré au niveau du calculateur. Ceci permet d'assurer au moins temporairement le fonctionnement du groupe électropompe en cas de déconnection du connecteur de signal.

Par ailleurs, il est connu un système dit Stop & Start pour arrêter le moteur thermique d'un véhicule dans certaines conditions d'arrêt prédéterminées, puis pour redémarrer le moteur thermique dans certaines conditions de redémarrage prédéterminées. Ce système a pour objectif de réduire la consommation d'essence du véhicule et de diminuer ses émissions de gaz d'échappement, notamment pour des trajets en milieu urbain.

Dans un véhicule équipé à la fois d'un système Stop & Start et d'un dispositif de direction assistée, il apparaît nécessaire de piloter ces deux équipements de façon corrélée. Par exemple, le dispositif de direction assistée est simplement désactivé lorsque le moteur thermique est en mode arrêt automatique.

En ce sens, la demande de brevet publiée sous le numéro DE 100 50 377 enseigne un dispositif de direction assistée pour véhicule automobile équipé d'un système Stop & Start. Ce dispositif a pour objectif d'éviter des variations abruptes de la force d'assistance de direction, lorsque le moteur est automatiquement arrêté ou redémarré. Pour ce faire, il est prévu d'ajuster le courant d'alimentation du moteur électrique du dispositif de direction assistée en fonction du mode dans lequel se trouve le moteur, parmi un mode de fonctionnement normal, un mode d'arrêt automatique et un mode de redémarrage automatique. S'il est déterminé que le moteur se trouve dans le mode d'arrêt automatique, le courant alimentant le moteur électrique du dispositif de direction assistée est progressivement annulé selon une première loi de comportement prédéterminée. S'il est déterminé que le moteur est en mode de redémarrage automatique, le courant alimentant le moteur électrique du dispositif de direction assistée est progressivement augmenté selon une seconde loi de comportement prédéterminée. S'il est déterminé que le moteur se trouve dans son mode de contrôle normal, la régulation du dispositif de direction assistée est réalisée de façon ordinaire. Il peut encore être fait référence au document de brevet EP 1375301 A2, qui divulgue les charactéristiques du préambule de la revendication 1.

Dans ce contexte, la présente invention propose un procédé de contrôle d'un dispositif de direction assistée pour véhicule automobile équipé d'un système Stop & Start permettant de conserver le dispositif de direction assistée en fonctionnement pendant une phase d'arrêt automatique du moteur thermique, sans pour autant que le fonctionnement du moteur électrique conduise à une nuisance sonore et une consommation excessive d'énergie électrique.

La présente invention a également pour objectif de permettre un pilotage automatique intelligent du dispositif de direction assistée dans les différents cas d'usage d'un véhicule équipé d'un système Stop & Start.

A cette fin, le procédé de contrôle d'un dispositif de direction assistée pour véhicule automobile équipé d'un système Stop & Start, le dispositif de direction assistée comprenant un groupe électropompe comprenant au moins un moteur électrique et un calculateur, est essentiellement tel qu'il comprend une étape de mise en mode veille du groupe électropompe consistant à réduire le régime de rotation du moteur électrique, cette étape étant réalisée par le calculateur suite à la réception d'un signal de commande transmis par le système Stop & Start au calculateur, ce signal de commande étant représentatif d'un passage automatique du moteur thermique en mode Stop.

Le procédé permet ainsi avantageusement de conserver le dispositif de direction assistée en fonctionnement pendant une phase d'arrêt automatique du moteur thermique, sans pour autant que le fonctionnement du moteur électrique conduise à une nuisance sonore et une consommation excessive d'énergie électrique. En effet, dans le mode veille du groupe électropompe, le moteur électrique tourne au ralenti ; il produit moins de bruit et consomme moins d'électricité de sorte qu'un gain en qualité est réellement perçu et que sont évitées les décharges de la batterie, respectivement.

Selon une particularité, le procédé comprend une étape de remise en fonction du groupe électropompe consistant à augmenter le régime de rotation du moteur électrique depuis son régime de rotation en mode veille jusqu'à son plein régime de rotation pour fournir une assistance de direction adéquate, cette étape étant réalisée par le calculateur suite à la réception d'un signal de commande représentatif de la vérification de l'une des conditions suivantes :
- la condition du passage automatique du moteur thermique en mode Start, le signal de commande correspondant étant transmis par le système Stop & Start au calculateur,
- la condition de la constatation par le calculateur d'un dépassement d'une valeur seuil prédéterminée par un signal de mesure, ladite valeur seuil étant représentative d'un angle prédéterminé du volant de direction et/ou d'une vitesse prédéterminée de rotation du volant de direction, le signal de mesure étant représentatif de la mesure par un capteur de l'angle du volant de direction et/ou de la vitesse de rotation du volant de direction, le capteur transmettant le signal de mesure au calculateur via un connecteur de signal.
- une condition de la constatation par le calculateur d'un dépassement d'une valeur seuil prédéterminée par un signal de mesure, ladite valeur seuil étant représentative d'un courant électrique prédéterminé traversant le moteur électrique, le signal de mesure étant représentatif du courant électrique traversant le moteur électrique, ce dernier étant proportionnel à l'angle et/ou la vitesse de rotation du volant de direction.

Selon la condition du passage automatique du moteur thermique en mode Start, le procédé permet ainsi avantageusement d'éviter des variations abruptes de la force d'assistance de direction, lorsque le moteur est automatiquement redémarré. En effet, le moteur électrique du groupe électropompe n'étant pas arrêté, mais mis dans un régime de rotation ralenti, la remise en fonction du groupe électropompe ne consiste pas à redémarrer le moteur électrique, mais à augmenter son régime de rotation, de sorte qu'est obtenu un gain en souplesse et en réactivité directement ressenti par le conducteur du véhicule.

Selon la condition de l'angle ou de la vitesse de rotation du volant, le procédé permet ainsi avantageusement de rendre disponibles les prestations du dispositif de direction assistée lors de sollicitations du volant de direction, sans pour autant que le moteur thermique ait été redémarré.

Selon la condition du courant électrique traversant le moteur électrique, le procédé permet ainsi avantageusement de rendre disponibles les prestations du dispositif de direction assistée lors de sollicitations du volant de direction, même en cas de déconnection du connecteur de signal, ou en cas d'absence de capteur d'angle ou de vitesse de rotation du volant, et ce même si le moteur thermique est arrêté.

Selon une autre particularité, le procédé comprend une condition complémentaire de mise en mode veille du groupe électropompe depuis son mode assistance, consistant :
- à une condition de la constatation par le calculateur d'un passement sous une valeur seuil prédéterminée d'un signal de mesure, la valeur seuil étant représentative d'un angle prédéterminé du volant de direction et/ou d'une vitesse de rotation prédéterminée du volant de direction, ou
- à une condition de la constatation par le calculateur d'un passement sous une valeur seuil prédéterminée d'un signal de mesure, ladite valeur seuil étant représentative d'un courant électrique prédéterminé traversant le moteur électrique.

Le procédé permet ainsi avantageusement de remettre le groupe électropompe du dispositif de direction assistée en mode veille, non pas à chaque arrêt du moteur thermique par le dispositif Start & Stop, mais également lorsque le volant de direction n'est plus sollicité, et ce, même en cas de déconnection du connecteur de signal.

Selon une autre particularité, le régime de rotation du moteur électrique est compris entre 500 et 2500 tours par minute lorsque le groupe électropompe est en mode veille.

D'autres caractéristiques et avantages de l'invention ressortiront clairement de la description qui en est faite ci-après, à titre indicatif et nullement limitatif, en référence aux dessins annexés, dans lesquels :
- la figure 1 représente schématiquement un mode de réalisation du dispositif de direction assistée relié à un système Stop & Start, et
- les figures 2 et 3 représentent schématiquement le procédé de contrôle du dispositif de direction assistée pour véhicule automobile équipé d'un système Stop & Start tel qu'illustré sur la figure 1.

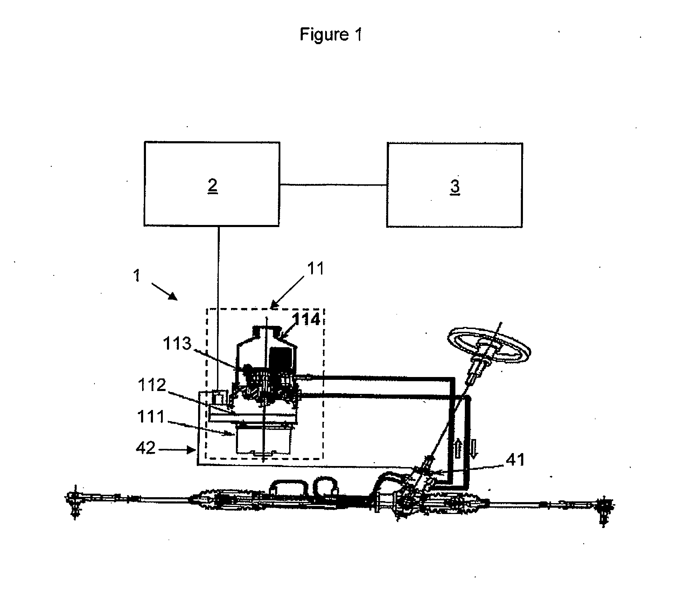

Comme illustré sur la figure 1, le dispositif de direction assistée 1 est relié au moteur thermique du véhicule par l'intermédiaire d'un système Stop & Start 2. Le système Stop & Start gérant l'état arrêté ou redémarré du moteur thermique peut ainsi avantageusement communiquer avec le calculateur du groupe électropompe pour l'avertir d'un changement d'état du moteur thermique.

Le système Stop & Start permet d'arrêter le moteur thermique lorsque le véhicule est immobilisé, plus particulièrement lorsque le véhicule a une vitesse nulle ou quasi nulle, et lorsque :
la boîte de vitesses mécanique est au point mort et la pédale d'embrayage en positon débrayée, ou
la boîte de vitesses automatique est en position N.

Le système Stop & Start permet également de redémarrer le moteur thermique :
lorsque le véhicule dépasse une vitesse prédéterminée, ou
lors d'un enfoncement de la pédale d'embrayage, ou
lors d'un passage d'un rapport sur la boîte de vitesses.

Comme illustré sur la figure 1, le dispositif de direction assistée comprend un groupe électropompe 11 ou GEP. Ledit groupe électropompe comprend au moins un moteur électrique 111 et un calculateur 112. Comme annoncé en introduction, le groupe électropompe comprend de plus une pompe hydraulique 113 et un réservoir d'huile 114.

Deux types de groupe électropompe sont considérés : un premier disposant d'un capteur 41 de l'angle A du volant de direction et/ou de la vitesse de rotation VR du volant de direction, le deuxième n'en disposant pas.

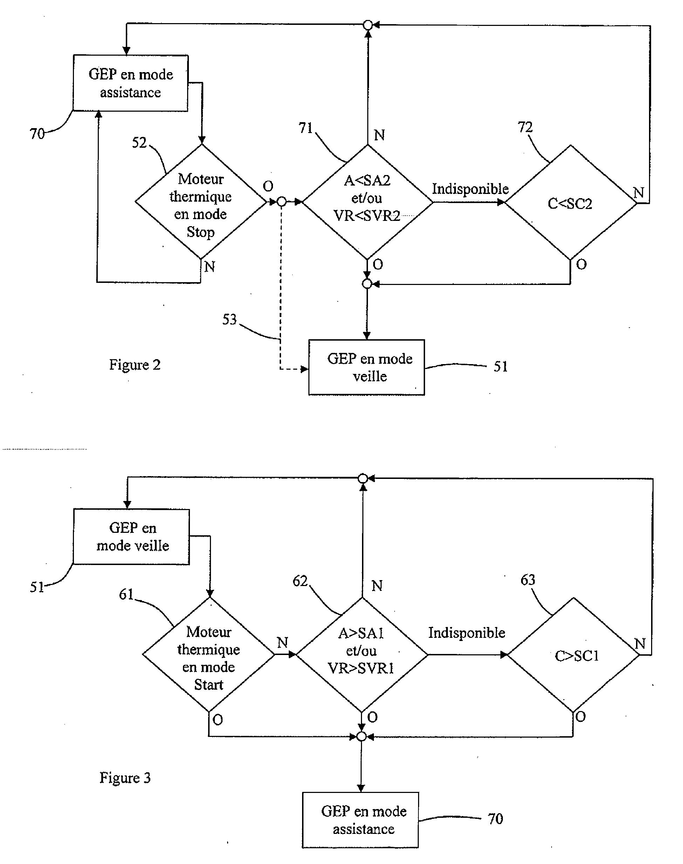

Les différentes étapes du procédé décrit ci-dessous sont schématiquement représentées sur les figures 2 et 3.

Le procédé de contrôle du dispositif de direction assistée 1 comprend une étape 51 de mise en mode veille du groupe électropompe. Cette étape consiste à réduire le régime de rotation du moteur électrique. Le calculateur est relié au système Stop & Start de façon à recevoir un signal de commande représentatif d'un passage automatique du moteur thermique 3 en mode Stop. La mise en mode veille du GEP est symbolisé par la liaison 53 en pointillés sur la figure 2.

Dès lors, suite à la réception de ce signal de commande, le calculateur réalise l'étape 51 de mise en mode veille du groupe électropompe en diminuant le courant électrique d'alimentation du moteur électrique jusqu'à ce que celui-ci atteigne un régime de rotation ralenti caractéristique de la mise en mode veille du groupe électropompe. La valeur du courant électrique d'alimentation du moteur électrique dans un régime de rotation ralenti caractéristique de la mise en mode veille du groupe électropompe est dénommée ci-dessous la valeur du courant électrique de veille.

Cet état du moteur thermique 3 en mode Stop représente ainsi, soit l'unique condition du passage du GEP du mode assistance en mode veille, symbolisé par la référence 52 sur la figure 2, soit l'une des conditions, associée à d'autres conditions, tel qu'il sera précisé par la suite.

Le procédé permet ainsi avantageusement de conserver le dispositif de direction assistée en fonctionnement, certes ralenti, pendant une phase d'arrêt automatique du moteur thermique. Le fonctionnement au ralenti du moteur électrique diminue significativement la nuisance sonore. En effet, le moteur électrique tournant au ralenti produit moins de bruit de sorte qu'un gain en qualité est réellement perçu. Le fonctionnement du groupe électropompe décharge indubitablement la batterie. La batterie étant ordinairement rechargée via l'alternateur entraîné par la rotation du moteur thermique, elle n'est pas rechargée lorsque le moteur thermique est stoppé, notamment par le système Stop & Start. Avantageusement, le fonctionnement au ralenti du moteur électrique diminue significativement la consommation d'énergie électrique et permet d'éviter des décharges de la batterie.

D'autres conditions sont nécessaires pour que, suite à la réception de ce signal de commande, le calculateur réalise l'étape 51 de mise en mode veille du groupe électropompe.

Le procédé comprend, en complément de l'étape de mise en veille du groupe électropompe, une étape 70 de remise en fonction du groupe électropompe à partir de son état de veille, tel que présenté figure 3. Cette étape consiste à augmenter le régime de rotation du moteur électrique depuis son régime de rotation en mode veille jusqu'à son plein régime de rotation. Le calculateur est relié au système Stop & Start de façon à recevoir un signal de commande représentatif d'un passage automatique du moteur thermique 3 en mode Start. Suite à la réception de ce signal de commande, le calculateur réalise l'étape 70 de remise en fonction du groupe électropompe en augmentant le courant électrique d'alimentation du moteur électrique jusqu'à ce que celui-ci atteigne son plein régime de rotation, ce régime étant caractéristique de la remise en fonction du groupe électropompe. Ce passage automatique du moteur thermique 3 en mode Start représente l'une des conditions alternatives du passage du GEP du mode veille en mode assistance, symbolisé par la référence 61 sur la figure 3, qui est la condition contraire à la condition 52.

Le procédé permet ainsi avantageusement d'éviter des variations abruptes de la force d'assistance de direction, lorsque le moteur est automatiquement redémarré. En effet, le moteur électrique du groupe électropompe n'étant pas arrêté, mais mis dans un régime de rotation ralenti, la remise en fonction du groupe électropompe ne consiste pas à redémarrer le moteur électrique, mais à augmenter son régime de rotation, de sorte qu'est obtenu un gain en souplesse et en réactivité directement ressenti par le conducteur du véhicule.

Il est à noter ici que le plein régime de rotation est défini comme le régime de rotation en mode de fonctionnement ordinaire du groupe électropompe permettant de fournir une assistance de direction adéquate. Quelque soit la sollicitation (en rotation) du volant, le groupe électropompe est dans un régime défini par une table. Ladite table définit notamment le courant électrique d'alimentation du moteur électrique du groupe électropompe, notamment en fonction de la sollicitation du volant de direction et de la vitesse du véhicule. Le calculateur se réfère notamment à cette table pour savoir quel courant d'alimentation délivrer au moteur électrique. La table définit plus particulièrement une valeur plancher du courant d'alimentation du moteur électrique, cette valeur étant représentative d'une non-sollicitation du volant et d'une vitesse nulle ou quasi nulle du véhicule. En cas de sollicitation du volant, le calculateur impose un courant électrique d'alimentation du moteur électrique en tout état de cause supérieur à ladite valeur plancher.

Le procédé comprend en outre d'autres conditions alternatives de remise en fonction du groupe électropompe, consistant donc à augmenter le régime de rotation du moteur électrique depuis son régime de rotation en mode veille jusqu'à son plein régime de rotation, pour fournir une assistance de direction adéquate. La condition 62, représentée figure 3 est la constatation par le calculateur d'un dépassement d'une valeur seuil SA1 et/ou SVR1 prédéterminée par un signal de mesure. Plus particulièrement, ladite valeur seuil est représentative d'un angle SA1 prédéterminé du volant de direction et/ou d'une vitesse SVR1 prédéterminée de rotation du volant de direction. Ledit signal de mesure est quant à lui représentatif de la mesure par un capteur 41 de l'angle A du volant de direction et/ou de la vitesse de rotation VR du volant de direction. Notons de plus que le capteur transmet en permanence le signal de mesure au calculateur via un connecteur de signal 42. Suite à la constatation par le calculateur du dépassement de la valeur seuil SA1 et/ou SVR1 prédéterminée par le signal de mesure, le calculateur réalise l'étape 70 de remise en fonction du groupe électropompe en augmentant le courant électrique d'alimentation du moteur électrique jusqu'à ce que celui-ci atteigne son plein régime de rotation caractéristique de la remise en fonction du groupe électropompe.

Le procédé permet ainsi avantageusement de rendre disponibles les prestations du dispositif de direction assistée lors de sollicitations du volant de direction, sans pour autant que le moteur thermique ait été redémarré.

Le procédé comprend en outre une condition 63 alternative aux précédentes de remise en fonction du groupe électropompe. A la différence des conditions 61 et 62, la condition 63 est réalisée suite à la constatation par le calculateur d'un dépassement d'une valeur seuil SC1 prédéterminée par un signal de mesure. Ladite valeur seuil est représentative d'un courant électrique prédéterminé traversant le moteur électrique. Ledit signal de mesure est quant à lui représentatif du courant électrique C traversant le moteur électrique. Ce dernier est proportionnel à l'angle et/ou la vitesse de rotation du volant de direction. En effet, quelque soit le régime du groupe électropompe, une action sur le volant provoque une augmentation de la pression dans le circuit hydraulique. Cette pression engendre une augmentation du couple résistif de la pompe hydraulique 113 associée au moteur électrique 111. Cette augmentation de couple résistif se traduit par une augmentation de la puissance électrique consommée. Comme la tension du réseau électrique est quasiment constante, cela se traduit par une augmentation du courant consommé par le groupe électropompe. Le calculateur qui, intrinsèquement, contrôle le courant d'alimentation du groupe électropompe, plus particulièrement le courant d'alimentation du moteur électrique, est avantageusement agencé pour détecter l'augmentation du courant consommé et traduire cette augmentation en réalisant l'étape 70 de remise en fonction du groupe électropompe, plus particulièrement en en augmentant le courant électrique d'alimentation du moteur électrique jusqu'à ce que celui-ci atteigne son plein régime de rotation, lorsque qu'il constate le dépassement de la valeur seuil SC1 prédéterminée par le signal de mesure correspondant.

Le procédé permet ainsi avantageusement de rendre disponibles les prestations du dispositif de direction assistée lors de sollicitations du volant de direction, même en cas de déconnection du connecteur de signal 42 reliant le calculateur au capteur 41 de l'angle A du volant de direction et/ou de la vitesse de rotation VR du volant de direction, et sans pour autant que le moteur thermique ait été redémarré. En outre, le procédé permet ainsi avantageusement d'être adapté au type de groupe électropompe ne proposant pas de capteur 41 de l'angle A du volant de direction et/ou de la vitesse de rotation VR du volant de direction. Ainsi, la notation « indisponible » figure 3 désigne soit l'absence de capteur de l'angle du volant de direction ou de la vitesse de rotation dudit volant, soit une mesure erronée suite à un dysfonctionnement, par exemple lors d'une déconnexion du connecteur de signal.

Notons que, si le groupe électropompe n'est pas mis en mode veille, mais arrêté lors d'un passage automatique du moteur thermique 3 en mode Stop, l'étape 70 de remise en fonction du groupe électropompe ne peut être réalisée. En effet, lorsque le groupe électropompe est arrêté (régime nul), le calculateur l'est également et ne détecte pas le courant électrique qui traverse le moteur électrique suite à une sollicitation du volant de direction.

Selon une variante de réalisation, telle qu'évoquée précédemment, le procédé comprend d'autres conditions nécessaires pour la mise en mode veille du groupe électropompe lorsque le moteur thermique n'a pas été automatiquement redémarré par le système Stop & Start selon la condition 61/52 et suite à une remise en fonctionnement du groupe électropompe selon la condition 62 ou 63.

Ainsi, une condition 71 de mise en mode veille du groupe électropompe, associée donc à la condition 52, est la constatation par le calculateur d'un passement sous une valeur seuil SA2 et/ou SVR2 prédéterminée du signal de mesure correspondant (capteur de l'angle du volant de direction ou capteur de vitesse de rotation du volant). Ladite valeur seuil est représentative d'un angle SA2 prédéterminé du volant de direction et/ou d'une vitesse de rotation SVR2 prédéterminée du volant de direction. Le fait que le moteur thermique n'a pas été automatiquement redémarré par le système Stop & Start se traduit par le fait que le calculateur n'a pas reçu le signal de commande représentatif d'un passage automatique du moteur thermique en mode Start.

Le procédé permet ainsi avantageusement de remettre le groupe électropompe du dispositif de direction assistée en mode veille, lorsque le volant de direction n'est plus sollicité, pendant une phase d'arrêt automatique du moteur thermique.

Le procédé comprend, en alternative ou en complément de la condition précédente, une condition 72 de mise en mode veille du groupe électropompe, toujours associée à la condition 52, c'est-à-dire lorsque le moteur thermique n'a pas été automatiquement redémarré par le système Stop & Start et suite à une remise en fonctionnement du groupe électropompe selon l'une des conditions 62 ou 63.

Cette condition 72 est réalisée suite à la constatation par le calculateur d'un passement sous une valeur seuil SC2 prédéterminée du signal de mesure correspondant. Ladite valeur seuil est représentative d'un courant électrique prédéterminé traversant le moteur électrique. Le fait que le moteur thermique n'a pas été automatiquement redémarré par le système Stop & Start se traduit par le fait que le calculateur n'a pas reçu le signal de commande représentatif d'un passage automatique du moteur thermique en mode Start.

Le procédé permet ainsi avantageusement de remettre le groupe électropompe du dispositif de direction assistée en mode veille, lorsque le volant de direction n'est plus sollicité, même en cas de déconnection du connecteur de signal 42 reliant le calculateur au capteur 41 de l'angle A du volant de direction et/ou de la vitesse de rotation VR du volant de direction, pendant une phase d'arrêt automatique du moteur thermique. En outre, le procédé permet ainsi avantageusement d'être adapté au type de groupe électropompe ne proposant pas de capteur 41 de l'angle A du volant de direction et/ou de la vitesse de rotation VR du volant de direction. Tel que précédemment expliqué, la notation « Indisponible » sur la figure 3 rend compte de ces deux situations.

Lorsque le groupe électropompe est mis en mode veille, le régime de rotation du moteur électrique est plus particulièrement réduit jusqu'à une vitesse de rotation comprise entre 500 et 2500 tours par minute.

Il est à noter que la valeur plancher du courant électrique d'alimentation du moteur électrique, tel que défini ci-dessus en référence à une table, est supérieure à la valeur du courant électrique de veille, tel que défini ci-dessus. A titre d'exemple non limitatif, la valeur seuil SC1 est comprise entre ladite valeur du courant électrique de veille et ladite valeur plancher. Toujours, à titre d'exemple non limitatif, la valeur seuil SC2 est légèrement supérieure, voire égale, à la valeur plancher.

A titre d'exemple non limitatif, pour constater un passement sous, ou un dépassement de, une valeur par une autre, le calculateur prend en compte une durée, strictement inférieure à une durée moyenne d'arrêt du moteur par le système Stop & Start lors d'un trajet en milieu urbain, durant laquelle chaque relation d'ordre définie pour les valeurs seuils ci-dessus doit être vraie. Cette particularité permet avantageusement d'éviter des changements de mode intempestifs du dispositif de direction assistée, qui seraient par exemple dues au bruitage des signaux de mesure.

## Revendications

1. Procédé de contrôle d'un dispositif de direction assistée (1) pour véhicule automobile équipé d'un système Stop & Start (2), le dispositif de direction assistée comprenant un groupe électropompe (11) comprenant au moins un moteur électrique (111) et un calculateur (112), **caractérisé en ce qu'**il comprend une étape (51) de mise en mode veille du groupe électropompe consistant à réduire le régime de rotation du moteur électrique, cette étape étant réalisée par le calculateur suite à la réception d'un signal de commande transmis par le système Stop & Start au calculateur, ce signal de commande étant représentatif d'un passage automatique du moteur thermique (3) en mode Stop.

2. Procédé selon la revendication 1, **caractérisé en ce qu'**il comprend une étape (70) de remise en fonction du groupe électropompe consistant à augmenter le régime de rotation du moteur électrique depuis son régime de rotation en mode veille jusqu'à son plein régime de rotation pour fournir une assistance de direction adéquate, cette étape étant réalisée par le calculateur suite à la réception d'un signal de commande représentatif de la vérification de l'une des conditions suivantes :
- la condition (61) du passage automatique du moteur thermique (3) en mode Start, le signal de commande correspondant étant transmis par le système Stop & Start au calculateur,
- la condition (62) de la constatation par le calculateur d'un dépassement d'une valeur seuil (SA1 et/ou SVR1) prédéterminée par un signal de mesure, ladite valeur seuil étant représentative d'un angle (SA1) prédéterminé du volant de direction et/ou d'une vitesse (SVR1) prédéterminée de rotation du volant de direction, le signal de mesure étant représentatif de la mesure par un capteur (41) de l'angle (A) du volant de direction et/ou de la vitesse de rotation (VR) du volant de direction, le capteur transmettant en permanence le signal de mesure au calculateur via un connecteur de signal (42),
- la condition (63) de la constatation par le calculateur d'un dépassement d'une valeur seuil (SC1) prédéterminée par un signal de mesure, ladite valeur seuil étant représentative d'un courant électrique prédéterminé traversant le moteur électrique, le signal de mesure étant représentatif du courant électrique (C) traversant le moteur électrique, ce dernier étant proportionnel à l'angle et/ou la vitesse de rotation du volant de direction.

3. Procédé selon la revendication 1, **caractérisé en ce qu'**il comprend une condition complémentaire de mise en mode veille du groupe électropompe consistant :
- à une condition (71) de la constatation par le calculateur d'un passement sous une valeur seuil (SA2 et/ou SVR2) prédéterminée d'un signal de mesure, la valeur seuil étant représentative d'un angle (SA2) prédéterminé du volant de direction et/ou d'une vitesse de rotation (SVR2) prédéterminée du volant de direction, ou
- à une condition (72) de la constatation par le calculateur d'un passement sous une valeur seuil (SC2) prédéterminée d'un signal de mesure, ladite valeur seuil étant représentative d'un courant électrique prédéterminé traversant le moteur électrique.

4. Procédé selon l'une des revendications précédentes, **caractérisé en ce que** le régime de rotation du moteur électrique est compris entre 500 et 2500 tours par minute lorsque le groupe électropompe est en mode veille.

## Patentansprüche

1. Verfahren zum Steuern einer Servolenkvorrichtung (1) für ein Kraftfahrzeug, das mit einem Stopp-Start-System (2) ausgestattet ist, wobei die Servolenkvorrichtung ein Elektropumpenaggregat (11) aufweist, das mindestens einen Elektromotor (111) und einen Rechner (112) aufweist, **dadurch gekennzeichnet, dass** es einen Schritt (51) des Umstellens des Elektropumpenaggregats auf Standby aufweist, der darin besteht, die Drehzahl des Elektromotors zu verringern, wobei dieser Schritt von dem Rechner im Anschluss an den Empfang eines Steuersignals, das von dem Stopp-Start-System zu dem Rechner übertragen wird, ausgeführt wird, wobei dieses Steuersignal für einen automatischen Übergang des Verbrennungsmotors (3) in einen Stoppmodus repräsentativ ist.

2. Verfahren nach Anspruch 1, **dadurch gekennzeichnet, dass** es einen Schritt (70) zur Wiederinbetriebnahme des Elektropumpenaggregats aufweist, der darin besteht, die Drehzahl des Elektromotors ausgehend von seiner Drehzahl im Standbymodus bis zur vollen Drehzahl zu erhöhen, um eine angemessene Servolenkung zu liefern, wobei dieser Schritt von dem Rechner im Anschluss an den Empfang eines Steuersignals, das für das Gelten einer der folgenden Bedingungen repräsentativ ist, ausgeführt wird:
- die Bedingung (61) des automatischen Übergangs des Verbrennungsmotors (3) in einen Startmodus, wobei das entsprechende Steuersignal von dem Stopp-Start-System zu dem Rechner übertragen wird,
- die Bedingung (62) der Feststellung durch den Rechner einer Überschreitung eines vorbestimmten Schwellenwerts (SA1 und/oder SVR1) durch ein Messsignal, wobei der Schwellenwert für einen vorbestimmten Winkel (SA1) des Lenkrads und/oder eine vorbestimmte Drehzahl (SVR1) des Lenkrads repräsentativ ist, wobei das Messsignal für die Messung durch einen Sensor (41) des Winkels (A) des Lenkrads und/oder der Drehzahl (VR) des Lenkrads repräsentativ ist, wobei der Sensor das Messsignal ununterbrochen an den Rechner über einen Signalanschluss (42) überträgt,
- die Bedingung (63) der Feststellung durch den Rechner einer Überschreitung eines vorbestimmten Schwellenwerts (SC1) durch ein Messsignal, wobei der Schwellenwert für einen vorbestimmten elektrischen Strom repräsentativ ist, der den Elektromotor durchquert, wobei das Messsignal für den elektrischen Strom (C), der den Elektromotor durchquert, repräsentativ ist, wobei Letzterer zu dem Winkel und/oder der Drehzahl des Lenkrads proportional ist.

3. Verfahren nach Anspruch 1, **dadurch gekennzeichnet, dass** es eine ergänzende Bedingung des Umstellens auf Standby des Elektropumpenaggregats aufweist, die aus Folgendem besteht:
- eine Bedienung (71) der Feststellung durch den Rechner eines Übergangs unter den vorbestimmten Schwellenwert (SA2 und/oder SVR2) eines Messsignals, wobei der Schwellenwert für einen vorbestimmten Winkel (SA2) des Lenkrads und/oder eine vorbestimmte Drehzahl (SVR2) des Lenkrads repräsentativ ist, oder
- eine Bedienung (72) der Feststellung durch den Rechner eines Übergangs unter den vorbestimmten Schwellenwert (SC2) eines Messsignals, wobei der Schwellenwert für einen vorbestimmten elektrischen Strom, der den Elektromotor durchquert, repräsentativ ist.

4. Verfahren nach einem der vorhergehenden Ansprüche, **dadurch gekennzeichnet, dass** die Drehzahl des Elektromotors zwischen 500 und 2 500 Umdrehungen pro Minute liegt, wenn sich das Elektropumpenaggregat im Standbymodus befindet.

## Claims

1. Method for controlling a power-steering device (1) for a motor vehicle equipped with a stop & start system (2), the power-steering device including an electric pump unit (11) comprising at least one electric motor (111) and one processor (112), **characterized in that** it includes a stage (51) in which the electric pump unit is switched to standby mode by reducing the rotation speed of the electric motor, this stage being implemented by the processor following receipt of a control signal sent by the stop & start system to the processor, this control signal representing an automatic switching of the heat engine (3) into stop mode.

2. Method according to Claim 1, **characterized in that** it includes a stage (70) in which the electric pump unit is reactivated by increasing the rotation speed of the electric motor from its rotation speed in standby mode up to its top rotation speed to provide adequate power steering, this stage being implemented by the processor following receipt of a control signal representing verification of one of the following conditions:
- the condition (61) involving automatic switching of the heat engine (3) into start mode, the corresponding control signal being sent by the stop & start system to the processor,
- the condition (62) involving determination by the processor that a predetermined threshold value (SA1 and/or SVR1) has been exceeded by a measurement signal, said threshold value representing a predetermined angle (SA1) of the steering wheel and/or a predetermined rotation speed (SVR1) of the steering wheel, the measurement signal representing the measurement by a sensor (41) of the angle (A) of the steering wheel and/or of the rotation speed (VR) of the steering wheel, the sensor continuously sending the measurement signal to the processor via a signal connector (42),
- the condition (63) involving determination by the processor that a predetermined threshold value (SCI) has been exceeded by a measurement signal, said threshold value representing a predetermined electrical current passing through the electric motor, the measurement signal representing the electrical current (C) passing through the electric motor, this latter being proportional to the angle and/or rotation speed of the steering wheel.

3. Method according to Claim 1, **characterized in that** it includes an additional condition for switching the electric pump unit into standby mode, comprising:
- a condition (71) involving determination by the processor that a measurement signal has dropped below a predetermined threshold value (SA2 and/or SVR2), the threshold value representing a predetermined angle (SA2) of the steering wheel and/or a predetermined rotation speed (SVR2) of the steering wheel, or
- a condition (72) involving determination by the processor that a measurement signal has dropped below a predetermined threshold value (SC2), said threshold value representing a predetermined electrical current passing through the electric motor.

4. Method according to one of the preceding claims, **characterized in that** the rotation speed of the electric motor is between 500 and 2500 revolutions per minute when the electric pump unit is in standby mode.
